# FASCICULE DE BREVET EUROPEEN

(11) **EP 3 152 080 B1**
(45) Date de publication et mention de la délivrance du brevet: **25.07.2018**
(21) Numéro de dépôt: 15728792.1
(22) Date de dépôt: 02.06.2015
(51) Int. Cl.: B60L 11/18, B25J 11/00

(54) **BASE DE RECHARGEMENT D'UNE BATTERIE ET PROCEDE DE RECHARGE METTANT EN OEUVRE UNE TELLE BASE**
LADESOCKEL FÜR EINE BATTERIE UND VERFAHREN ZUR VERWENDUNG DES LADESOCKELS
CHARGING BASE FOR A BATTERY AND METHOD FOR USING SUCH A BASE

(30) Priorité: 05.06.2014 FR 1455102
(43) Date de publication de la demande: 12.04.2017
(73) Titulaire: Softbank Robotics Europe, 75015 Paris (FR)
(72) Inventeur: CLERC, Vincent, F-92140 Clamart (FR); GARCIA, Nicolas, F-75015 Paris (FR); SOUCHET, Lucas, F-75015 Paris (FR); CHEVRY, Vincent, F-75015 Paris (FR)
(74) Mandataire: Collet, Alain
(86) Numéro de dépôt international: PCT/EP2015/062198
(87) Numéro de publication internationale: WO 2015/185525

(56) Documents cités:
- EP-A2- 1 921 523
- WO-A1-2014/019224
- US-A- 5 926 909
- US-A1- 2010 324 736
- US-A1- 2013 325 244
- US-A1- 2013 335 900

## Description

L'invention concerne un ensemble de rechargement comprenant un véhicule mobile et une base de rechargement d'une batterie rechargeable du véhicule mobile et s'applique notamment au domaine de la robotique. L'invention concerne également un procédé de recharge d'une batterie rechargeable mettant en oeuvre un tel ensemble. Les demandes de brevet EP 1 921 523 (Irobot Corporation) et US2010/324736 (Yoo et al.) décrivent un tel robot. Un véhicule mobile fonctionnant sur batterie nécessite à un moment donné une recharge de sa batterie. Un véhicule mobile peut être par exemple un robot à caractère humanoïde. On entend par robot à caractère humanoïde, un robot présentant des similitudes avec le corps humain. Il peut s'agir du haut du corps, ou uniquement d'un bras articulé se terminant par une pince assimilable à une main humaine. Dans la présente invention, le haut du corps du robot est similaire à celui d'un tronc humain. Un robot humanoïde peut être plus ou moins sophistiqué. Il peut contrôler son propre équilibre statiquement et dynamiquement et marcher sur deux membres, éventuellement en trois dimensions, ou simplement rouler sur une base. Il peut recueillir des signaux issus de l'environnement (son, vue, toucher, etc.) et réagir selon un ou plusieurs comportements plus ou moins sophistiqués, et interagir avec d'autres robots ou êtres humains, soit par la parole, soit par la gestuelle. Pour une génération actuelle de robots humanoïdes, des programmeurs sont capables de créer des scénarios, plus ou moins sophistiqués, comme des séquences d'événements envers le robot et/ou actions effectuées par le robot. Ces actions peuvent être conditionnelles à certains comportements de personnes qui interagissent avec le robot. Mais dans ces robots humanoïdes de la première génération, la programmation d'application est faite dans un outil de développement et chaque application nécessite d'être lancée par un déclenchement produisant l'occurrence incluse dans l'application.

Dans le domaine de la robotique humanoïde, il y a donc besoin de robot humanoïde capable de vivre une « vie autonome », comme le fait un être humain, qui est capable de se comporter d'une manière déterminée, en fonction de l'environnement dans lequel il évolue.

Généralement, un tel robot est alimenté en électricité par une ou des batteries d'accumulateurs, ou plus communément une ou des batteries. Il s'agit d'un ensemble d'accumulateurs électriques reliés entre eux de façon à créer un générateur électrique de tension et de capacité désirée. Le premier but de la batterie est de fournir l'intensité et la tension nécessaire au déplacement du robot. La batterie peut aussi être utilisée pour alimenter l'appareillage électronique embarqué sur le robot.

Il est alors nécessaire, à un moment donné, de recharger la batterie du robot. Généralement, un robot fonctionnant sur batterie est apte à se mouvoir tant que la batterie est chargée et devient immobile en fin de charge de celle-ci. Il faut alors une intervention extérieure pour, par exemple, aller poser le robot sur une base de rechargement de la batterie. Certains robots sont aptes à retourner à leur base de rechargement de manière autonome mais il arrive qu'ils aient des difficultés à se connecter à leur base de rechargement, soit à cause d'un mauvais positionnement du robot sur sa base, soit à cause de mauvais contacts entre les connecteurs du robot et de la base de rechargement. Par ailleurs, il arrive, lorsque le robot se connecte à sa base de rechargement, que des arcs électriques se créent entre les connecteurs électriques du robot et de la base de rechargement, pouvant détériorer le robot et/ou la base.

L'invention vise à pallier tout ou partie des problèmes cités plus haut en proposant un ensemble de rechargement comprenant un véhicule mobile et une base de rechargement d'une batterie du véhicule mobile, ainsi qu'un procédé mettant en oeuvre un tel ensemble, permettant à tout véhicule mobile tel un robot de se recharger de manière autonome.

A cet effet, l'invention a pour objet un ensemble de rechargement comprenant un véhicule mobile et une base de rechargement de forme complémentaire au véhicule mobile et apte à réceptionner le véhicule mobile et destinée à recharger une batterie d'un véhicule mobile comprenant au moins une roue, la base étant connectable à une source électrique, caractérisé en ce que la base comprend :
- une surface de réception et un plan socle destiné à être posé sur un plan de référence, la surface de réception et le plan socle de la base formant un angle aigu,
- une cavité hémisphérique réalisée en creux dans la surface de réception et destinée à recevoir la au moins une roue,
- au moins un connecteur électrique disposé de façon à permettre la connexion de la base avec la batterie lors de la descente de la au moins une roue dans la cavité hémisphérique.

Selon un mode de réalisation, la base de rechargement comprend en outre un connecteur de présence du véhicule mobile sur la base de façon à être activé après la connexion du connecteur électrique et de la batterie.

Selon un mode de réalisation, la base de rechargement comprend une première contreforme positionnée à l'intersection entre la surface de réception et le plan socle, destinée à former une butée pour une deuxième roue du véhicule.

Selon un autre mode de réalisation, la base de rechargement comprend une glissière réalisée dans la surface de réception entre l'intersection de la surface de réception et du plan socle et la cavité, la glissière étant destinée à guider au moins une roue vers la cavité.

Avantageusement, la glissière est configurée pour assurer un centrage de la roue autour d'une direction principale de la glissière, et la précision du centrage augmente en se rapprochant de la cavité.

Selon un autre mode de réalisation, la cavité a un centre et un pôle, un axe Z passant par le centre et le pôle étant sensiblement perpendiculaire au plan de référence, et la base comprend un évidement traversant la base depuis le pôle de la cavité et sensiblement parallèlement à l'axe Z.

Avantageusement, le connecteur comprend un contact mobile dans une direction sensiblement perpendiculaire au plan socle.

Avantageusement, la base comprend un pourtour apte à épouser les formes du véhicule mobile.

L'invention a aussi pour objet un procédé de recharge mettant en oeuvre une base selon l'une des revendications précédentes et un véhicule configuré pour se recharger sur la base, caractérisé en ce qu'il comporte les étapes suivantes :
- Translation du véhicule mobile sur la surface de réception
- Insertion de la au moins une roue dans la cavité hémisphérique et mise en contact simultanée du connecteur de la base avec la batterie du véhicule mobile

Avantageusement, le procédé de recharge comporte une étape d'activation de la recharge de la batterie comportant les étapes suivantes :
- Vérification de la présence du véhicule mobile sur la base de rechargement par enfoncement du connecteur de présence,
- Mesure de la tension aux bornes de la batterie et comparaison de la tension mesurée à une valeur minimale et une valeur maximale de tension,
- Mesure de la résistance interne de la batterie et comparaison de la résistance à une valeur minimale et une valeur maximale de résistance.

Le procédé peut comporter en outre une étape de mise en butée de la deuxième roue contre la contreforme.

Le procédé peut comporter au préalable une étape de guidage d'au moins une roue vers la cavité au moyen de la glissière.

Le véhicule mobile est par exemple un robot. Ce robot dispose d'au moins une roue pour permettre son déplacement sur un plan de référence.

Alternativement, le véhicule mobile peut être tout type de véhicule disposant d'au moins une roue.

L'invention a également pour objet un robot à caractère humanoïde comprenant une base de rechargement selon l'invention.

L'invention sera mieux comprise et d'autres avantages apparaîtront à la lecture de la description détaillée d'un mode de réalisation donné à titre d'exemple, description illustrée par le dessin joint dans lequel :
- la figure 1 représente un robot à caractère humanoïde configuré pour se recharger sur une base de rechargement selon l'invention,
- la figure 2 représente un exemple d'un socle comprenant des roues pour un robot à caractère humanoïde configuré pour se recharger sur une base de rechargement selon l'invention,
- la figure 3 représente schématiquement une vue en coupe d'une base de rechargement selon l'invention,
- la figure 4 représente une vue d'une base de rechargement selon l'invention,
- la figure 5 représente schématiquement les étapes d'un procédé de recharge selon l'invention.
- la figure 6 représente schématiquement différentes étapes pendant lesquelles un véhicule mobile rejoint une base de rechargement selon l'invention.

Par souci de clarté, les mêmes éléments porteront les mêmes repères dans les différentes figures.

Dans la description, l'invention est décrite avec l'exemple d'un robot se déplaçant au moyen d'au moins une roue. Cependant, l'invention est applicable à tout autre véhicule mobile ayant au moins une roue.

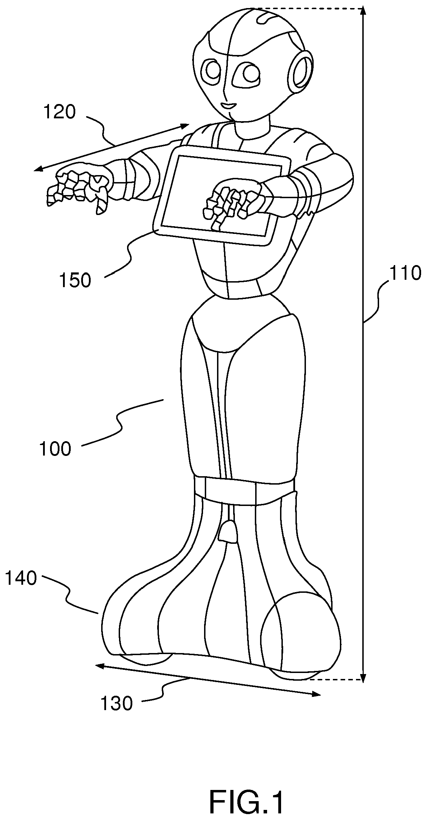

La figure 1 représente un robot 100 à caractère humanoïde configuré pour se recharger sur une base de rechargement selon l'invention. Le robot 100 sur la figure 1 est pris comme exemple d'un robot humanoïde configuré pour être rechargé sur une base selon l'invention. La partie inférieure du robot 100 sur la figure 1 n'est pas fonctionnelle pour la marche, mais peut se mouvoir dans n'importe quelle direction sur son socle 140 qui roule sur la surface sur laquelle le robot 100 se trouve. Dans notre exemple, le robot 100 a une hauteur 110 qui peut être d'environ 120 cm, une profondeur 120 d'environ 65 cm et une largeur 130 d'environ 40 cm. Dans une configuration spécifique, le robot a une tablette 150 avec laquelle il peut communiquer des messages (audio, vidéo, pages internet) à son environnement, ou recevoir des entrées d'utilisateurs à travers une interface tactile de la tablette. En plus du processeur de la tablette, le robot utilise aussi le processeur de sa propre carte-mère qui peut être par exemple une carte ATOM ™ Z530 de Intel™. Avantageusement, le robot a aussi un processeur dédié aux flux de données entre la carte-mère et les cartes supportant les capteurs rotatifs magnétiques ou en abrégé MRE pour le terme anglo-saxon Magnetic Rotary Encoders et des capteurs qui contrôlent les moteurs des articulations dans un membre et les balles que le robot utilise comme roues, dans un mode de réalisation de l'invention. Les moteurs peuvent être de types différents, en fonction de l'amplitude du couple maximum nécessaire pour une articulation définie. Par exemple, moteurs à courant continu à balais sans noyau de e-minebea™ (SE24P2CTCA par exemple) peuvent être utilisés, ou des moteurs à courant continu sans balai de Maxon™ (EC45_70W par exemple). Les capteurs rotatifs magnétiques utilisent préférentiellement l'effet Hall, avec 12 ou 14 bits de précision.

Dans des modes de réalisation de l'invention, le robot illustré sur la figure 1 comprend aussi différents types de capteurs. Certains capteurs sont utilisés pour contrôler la position et les mouvements du robot. C'est le cas, par exemple, d'une unité inertielle localisée dans le torse du robot et comprenant un gyromètre 3-axes et un accéléromètre 3-axes. Le robot peut aussi inclure deux caméras 2D couleur RGB sur l'avant du robot (haut et bas) du type système sur puce (ou SOC pour le terme anglo-saxon System On Chip), comme celles de Shenzen V-Vision Technology Ltd™ (OV5640), avec une résolution de 5 mégapixels à 5 images par seconde et un champ de vision (aussi appelé FOV pour le terme anglo-saxon Field Of View) d'environ 57° horizontal et 44° vertical. Un capteur 3D peut aussi être inclus derrière les yeux du robot, comme le capteur ASUS XTION™ SOC avec une résolution de 0,3 mégapixels à 20 images par seconde, avec environ le même champ de vision que les caméras 2D. Le robot peut aussi être équipé de générateurs de lignes laser, par exemple trois au niveau de la tête et trois dans la base, de manière à être capable de détecter sa position relative par rapport à des objets et/ou êtres humains dans son environnement. Le robot peut aussi inclure des microphones pour être capable de détecter des sons dans son environnement. Dans un mode de réalisation, quatre microphones avec une sensibilité de 300mV/Pa +/-3dB à 1kHz et une gamme de fréquences de 300Hz à 12kHz (-10dB relativement à 1kHz) peuvent être implantés dans la tête du robot. Le robot peut aussi inclure deux capteurs sonar, éventuellement positionnés devant et derrière sa base, pour mesurer la distance qui le sépare d'objets et/ou êtres humains dans son environnement. Le robot peut aussi inclure des capteurs tactiles, sur sa tête et sur ses mains, pour permettre des interactions avec les êtres humains. Il peut aussi inclure des pare-chocs sur sa base pour se protéger d'obstacles qu'il rencontre sur son parcours.

Pour traduire ses émotions et communiquer avec les êtres humains dans son environnement, le robot peut aussi inclure :
- des LEDs ou diodes électroluminescentes, par exemple dans ses yeux, ses oreilles et sur ses épaules;
- des haut-parleurs, par exemple au nombre de deux, localisés dans ses oreilles.

Le robot peut communiquer avec une base ou d'autres robots par le biais d'une connexion Ethernet RJ45 ou WiFi 802.11.

Le robot peut être alimenté par une batterie Lithium Fer Phosphate avec une énergie d'environ 400 Wh ou une batterie Lithium Polymère trimix (Lithium Cobalt Manganèse) d'environ 860Wh. Le robot peut accéder à une base de rechargement adaptée au type de batterie qu'il contient.

La position et les mouvements du robot sont contrôlés par ses moteurs, en utilisant des algorithmes qui sont activés par des chaînes définies dans chaque membre et des effecteurs définis à la terminaison de chaque membre, compte tenu des mesures des capteurs.

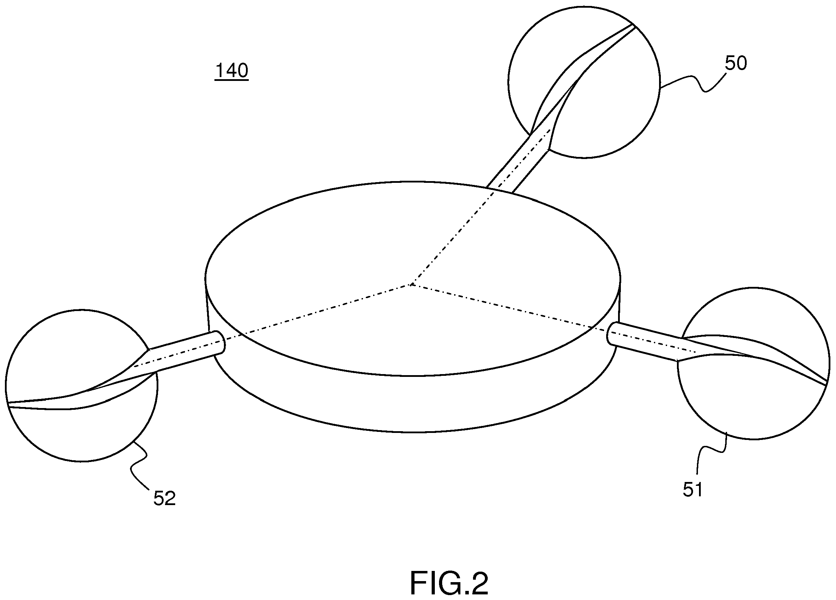

La figure 2 représente un exemple d'un socle 140 comprenant des roues 50, 51, 52 pour un robot à caractère humanoïde configuré pour se recharger sur une base de rechargement selon l'invention. Dans l'exemple représenté sur la figure 2, le socle 140 comprend trois roues 50, 51, 52. Afin d'être configuré pour se recharger sur une base de rechargement selon l'invention, le socle 140 doit comprendre au moins une roue 50. Il peut bien entendu en comprendre plusieurs autres.

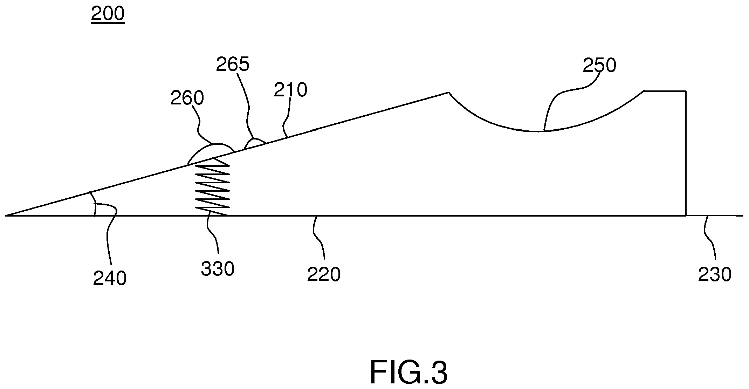

La figure 3 représente schématiquement une vue en coupe d'une base 200 de l'ensemble de rechargement selon l'invention. La base 200 de rechargement est destinée à recharger une batterie d'un véhicule mobile comprenant au moins une roue 50. La base 200 est connectable à une source électrique. La base 200 comprend une surface de réception 210 et un plan socle 220 destiné à être posé sur un plan de référence 230. La surface de réception 210 et le plan socle 220 forment un angle aigu 240. La base 200 comprend une cavité hémisphérique 250 destinée à recevoir la roue 50. La base comprend aussi un connecteur électrique 260. Le connecteur électrique 260 peut par exemple être sur la surface de réception 210. Le connecteur 260 comprend un contact mobile 330 dans une direction sensiblement perpendiculaire au plan socle 220. Le contact mobile 330 peut être obtenu au moyen d'un ressort ou toute autre pièce ayant une certaine élasticité.

La base 200 comprend également un connecteur de présence 265 du véhicule mobile sur la base 200 de façon à être activé après la connexion du connecteur électrique 260 et de la batterie. Le connecteur de présence 265 a un degré de liberté en translation dans une direction sensiblement perpendiculaire au plan socle 220. Ainsi, quand le véhicule mobile prend place sur la base 200 de rechargement afin de recharger sa batterie, le connecteur de présence 265 se translate sous le poids du véhicule mobile. Autrement dit, le connecteur de présence 265 s'enfonce dans la surface de réception 210 de la base 200 quand le véhicule mobile est présent sur sa base.

Le connecteur électrique 260 et le connecteur de présence 265 sont légèrement décalés. Ainsi, lors de la descente de la roue 50 dans la cavité hémisphérique 250, tout d'abord, il y a la connexion électrique entre le connecteur électrique 260 et la base 200. Ensuite, seulement après la connexion électrique, le connecteur de présence 265 est activé, c'est-à-dire enfoncé, du fait de la présence du véhicule mobile sur la base de rechargement 200. La recharge s'effectue alors. L'enfoncement du connecteur de présence 265 en dernier lieu permet d'éviter la formation d'arc électrique pouvant entraîner des endommagements des pièces. Inversement, une fois la recharge de la batterie effectuée et au moment où le véhicule mobile quitte sa base, il y a tout d'abord déconnexion du connecteur de présence 265, générant alors une déconnexion électrique. Ensuite, il y a déconnexion du connecteur électrique 260 du véhicule mobile (c'est-à-dire une déconnexion physique), puisque le véhicule mobile quitte la base 200.

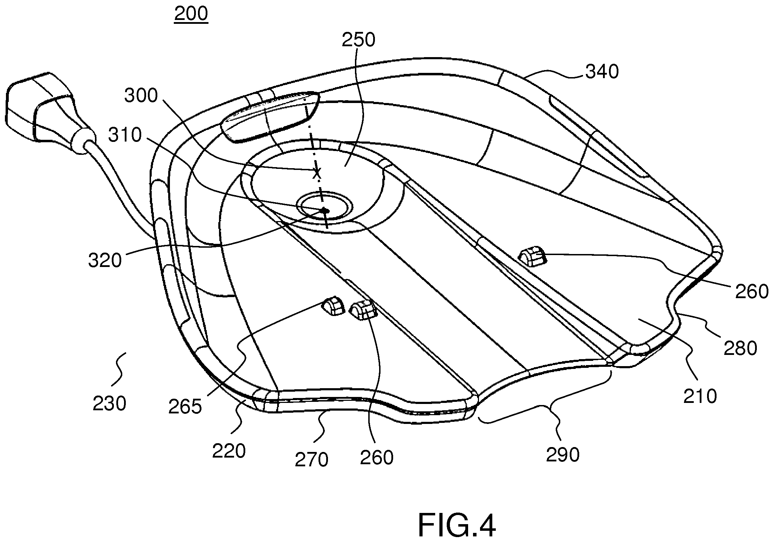

La figure 4 représente une vue de la base 200 de rechargement selon l'invention. La base 200 comprend une première contreforme 270 positionnée à l'intersection entre la surface de réception 210 et le plan socle 220. La première contreforme 270 est destinée à former une butée pour une deuxième roue 52 du véhicule mobile, dans le cas où le véhicule comprend deux roues. Dans le cas où le véhicule comprend trois roues 50, 51, 52 comme illustré sur la figure 2, la base 200 comprend une seconde contreforme 280, elle aussi destinée à former une butée pour la troisième roue 51 du véhicule mobile.

La base 200 comprend une glissière 290 réalisée dans la surface de réception 210 entre l'intersection de la surface de réception 210 et du plan socle 220 et la cavité 250. La glissière 290 est destinée à guider la roue 50 vers la cavité 250.

La base 200 permet une bonne mise en place du véhicule mobile pour son rechargement sur la base 200. Dans le cas d'un véhicule mobile comprenant trois roues 50, 51, 52, la roue 50 s'insère dans la glissière 290 qui permet le guidage de la roue 50 vers la cavité hémisphérique 250 de la base 200 de rechargement. Autrement dit, la glissière 290 est configurée pour assurer un centrage de la roue 50 autour d'une direction principale de la glissière 290, et la précision du centrage augmente en se rapprochant de la cavité 250. Dans sa translation sur la surface de réception 210, la roue 50 est guidée par la glissière 290, idéalement en son centre. Quand la roue 50 entre en contact avec la cavité hémisphérique 250, la roue 50 suit la ligne de plus grande pente de la cavité afin que la roue 50 prenne position au centre de la cavité hémisphérique 250. Autrement dit, la trajectoire de la roue 50 correspond à une montée vers la cavité hémisphérique 250 puis une redescente dans la cavité hémisphérique 250. L'insertion de la roue 50 dans la cavité 250 a lieu simultanément avec la mise en contact du connecteur électrique 260 avec la batterie du véhicule mobile.

La roue 50 est insérée dans la cavité 250. Le degré de liberté en translation du véhicule mobile est bloqué. Les roues 51, 52 viennent en butée contre les contreformes 270, 280. Le degré de liberté en rotation du véhicule mobile est bloqué. Ainsi le véhicule mobile est parfaitement placé sur sa base 200 de rechargement. Le connecteur électrique 260 de la base 200 est alors en contact avec un connecteur électrique du véhicule mobile pour assurer la recharge de la batterie du véhicule mobile. Sur la figure 4, deux connecteurs 260 sont représentés. La base 200 selon l'invention peut en comporter un seul ou plus que deux.

La cavité 250 a un centre 300 et un pôle 310, un axe Z passant par le centre 300 et le pôle 310 étant sensiblement perpendiculaire au plan de référence 230. La base 200 comprend un évidement 320 traversant la base 200 depuis le pôle 310 de la cavité 250 et sensiblement parallèlement à l'axe Z. L'évidement 320 permet d'évacuer de l'eau ou toute autre substance liquide accumulée dans la cavité 250, directement ou indirectement par l'intermédiaire de la roue 50.

La base 200 comprend un pourtour 340 apte à épouser les formes du véhicule mobile. Ainsi, une fois mis en place sur sa base 200 de rechargement, le véhicule mobile est bien maintenu par sa base. Et le pourtour 340 est également un moyen de s'assurer qu'il s'agit bien d'un véhicule mobile correspondant à la base qui vient se recharger.

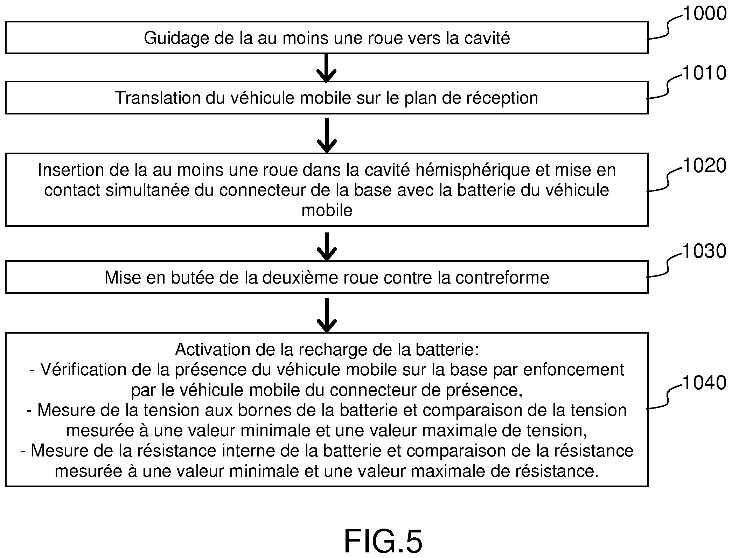

La figure 5 représente schématiquement les étapes d'un procédé de recharge selon l'invention. Selon l'invention, le procédé de recharge comporte les étapes suivantes :
- Guidage d'au moins une roue 50 vers la cavité hémisphérique 250,
- Translation du véhicule mobile sur la surface de réception 210,
- Insertion d'au moins une roue 50 dans la cavité hémisphérique 250 et mise en contact simultanée du connecteur 260 de la base avec la batterie du véhicule mobile,
- Mise en butée de la deuxième roue 52 du véhicule contre la contreforme 270.

Le procédé comporte en outre une étape d'activation de la recharge comportant les étapes suivantes :
- Vérification de la présence du véhicule mobile sur la base 200 par enfoncement par le véhicule mobile du connecteur de présence 265,
- Mesure de la tension aux bornes de la batterie et comparaison de la tension mesurée à une valeur minimale et une valeur maximale de tension,
- Mesure de la résistance interne de la batterie et comparaison de la résistance mesurée à une valeur minimale et une valeur maximale de résistance.

Pour que la recharge de la batterie puisse être activée, il faut que les trois étapes précédemment citées soient réalisées. Il faut donc s'assurer que le véhicule mobile est bien positionné sur sa base. Cela est vérifié lorsque le connecteur de présence 265 est enfoncé. Comme la base est de forme complémentaire au véhicule mobile et qu'elle comprend un pourtour qui épouse les formes du véhicule mobile, cette étape assure la présence d'un véhicule mobile accrédité pour cette base de rechargement.

De plus, il faut que la tension aux bornes de la batterie se situe entre une valeur minimale et une valeur maximale de tension prédéfinies. Par exemple, pour une batterie de tension nominale de 25,4 V, la tension mesurée aux bornes de la batterie doit se situer entre 17 et 26V.

Enfin, il faut que la résistance interne de la batterie soit comprise entre une valeur minimale et une valeur maximale de résistance prédéfinies. Cette valeur est de quelques dizaines de milliohms. On peut souligner que la résistance interne du corps humain est de quelques kiloohms. Cette mesure constitue donc une sécurité pour éviter toute circulation d'un courant dans le cas où un corps humain serait positionné sur la base de rechargement.

Quand ces trois conditions sont remplies, la recharge est alors activée.

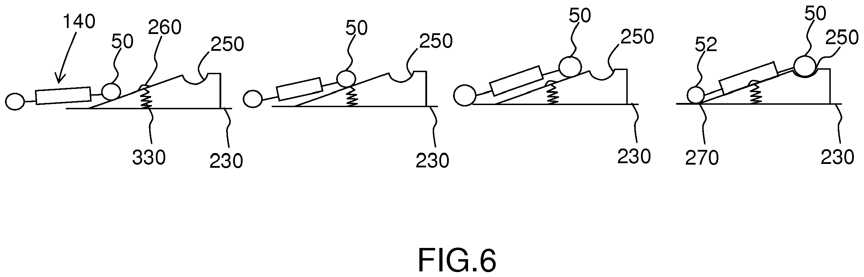

Les figures 6a, 6b, 6c, 6d représentent schématiquement différentes étapes pendant lesquelles un véhicule mobile rejoint une base de rechargement selon l'invention. Pour alléger les figures, seul le socle 140 du véhicule mobile a été représenté.

Sur la figure 6a, le véhicule mobile approche de sa base 200 de rechargement. Pour détecter sa base 200, le véhicule peut comprendre un dispositif de détection d'obstacle comprenant au moins un émetteur de faisceau électromagnétique apte à former un plan virtuel pouvant s'intersecter avec l'obstacle, au moins un capteur d'image apte à produire une image de l'intersection du plan virtuel et de l'obstacle, un moyen d'analyse d'image apte à déterminer l'obstacle, configuré pour comparer l'image avec une image de référence.

Plus précisément, le dispositif de détection peut comprendre un premier émetteur dit horizontal d'un premier faisceau horizontal s'étendant dans un premier plan virtuel sensiblement parallèle au plan de référence et le premier capteur d'image apte à produire une image de l'intersection du premier plan virtuel et de l'obstacle.

Le véhicule mobile ayant un sens de déplacement privilégié dans un premier sens selon un axe X, le premier plan virtuel forme un secteur angulaire autour de l'axe X, et le dispositif de détection d'obstacle comprend en outre un deuxième émetteur dit horizontal d'un deuxième faisceau horizontal s'étendant dans un deuxième plan virtuel dans un premier sens, formant un secteur angulaire autour d'un axe Y perpendiculaire à l'axe X et sensiblement parallèle au plan de référence. Le dispositif de détection d'obstacle comprend un deuxième capteur d'image apte à produire une image de l'intersection du deuxième plan virtuel et de l'obstacle. Le dispositif comprend un troisième émetteur dit horizontal d'un troisième faisceau horizontal s'étendant dans un troisième plan virtuel dans un deuxième sens, opposé au premier sens, formant un secteur angulaire autour de l'axe Y et sensiblement parallèle au plan de référence. Le dispositif de détection d'obstacle comprend un troisième capteur d'image apte à produire une image de l'intersection du troisième plan virtuel et de l'obstacle.

Les premier, deuxième et troisième émetteurs dit horizontaux sont positionnés sur le véhicule mobile à une certaine hauteur du plan de référence. Les plans virtuels formés respectivement par les émetteurs peuvent s'intersecter avec un obstacle situé à une hauteur supérieure à la hauteur ou avec un obstacle dont une partie se situe au niveau des plans virtuels. Les émetteurs permettent une détection d'obstacle que l'on peut qualifier de détection panoramique.

Le capteur d'image peut également être un capteur d'image dit « grand angle » permettant à lui seul une prise de vue des trois plans virtuels horizontaux.

Le dispositif de détection d'obstacle comprend un émetteur dit pelle d'un faisceau pelle s'étendant dans un plan virtuel configuré pour s'intersecter avec le plan de référence selon une droite perpendiculaire à l'axe X. Le premier capteur d'image est apte à produire une image de la droite résultant de l'intersection du plan virtuel et du plan de référence. Le plan virtuel formé par l'émetteur peut s'intersecter avec un obstacle situé à une hauteur correspondant à la distance entre le plan virtuel et le plan de référence. Il peut s'agir d'un obstacle posé sur le plan de référence de grande taille ou de petite taille. On peut notamment citer comme exemple d'obstacles un trou ou un butoir de porte.

Le dispositif de détection d'obstacle comprend un premier émetteur dit oblique d'un premier faisceau oblique s'étendant dans un premier plan virtuel oblique dans le premier sens selon l'axe X et sécant au plan de référence. Le dispositif de détection d'obstacle comprend un second émetteur dit oblique d'un second faisceau oblique s'étendant dans un second plan virtuel oblique dans le premier sens selon l'axe X et sécant au plan de référence. Le premier capteur d'image est apte à produire une image autour de l'intersection des plans virtuels obliques avec le plan de référence.

Les faisceaux obliques peuvent s'intersecter avec de petits obstacles, des trous, ou des obstacles de plus grande taille, avec lesquels les faisceaux horizontaux n'auraient éventuellement pas pu s'intersecter.

Ainsi, les six faisceaux permettent au dispositif de détection d'obstacle de former une intersection avec des plans virtuels et tout obstacle se situant dans un environnement proche. Dans le cas de la base 200 de rechargement, l'intersection entre les plans virtuels et la base 200 va former une image précise connue du véhicule mobile. Ainsi, le véhicule mobile va détecter la base 200 et pourra s'y diriger afin d'effectuer la recharge de sa batterie.

La roue 50 est guidée vers la cavité 250 au moyen de la glissière 290. La glissière présente la particularité de former un centrage lâche au niveau de l'intersection entre le plan socle 220 et la surface de réception 210. Ainsi la roue 50 peut se translater sur la surface de réception 210 dans le sens de la glissière 290, même si le véhicule mobile n'est pas parfaitement centré avec la base 200. Plus la glissière 290 est proche de la cavité 250, plus le centrage est affiné. Ainsi, en fin de translation du véhicule mobile sur la surface de réception 210, le véhicule mobile est parfaitement mis en place sur sa base 200.

Pendant la translation du véhicule mobile sur la surface de réception 210, comme représenté sur la figure 6b, le socle 140 passe au-dessus du connecteur 260, en évitant tout raclement et tout frottement entre le socle 140 et le connecteur 260. Ainsi, le connecteur n'est pas endommagé. De plus, cela permet d'éviter la création d'arc électrique entre les connecteurs de la base 200 et du véhicule.

Il est à noter que la figure 6b est une vue en coupe, la roue 50 se translate dans la glissière 290 et ne touche pas au connecteur 260, placé hors de la glissière 290.

La translation du véhicule mobile vers la cavité 250 se poursuit (voir figure 6c). Enfin, la roue 50 est insérée dans la cavité 250 en suivant la ligne de plus grande pente de la cavité 250, la roue 52 arrive alors en butée contre la contreforme 270, et le connecteur 260 de la base 200 entre alors simultanément en contact avec les pôles électriques positif et négatif de la batterie du véhicule mobile sous la double action de la descente dans la cavité et la fin de la translation selon l'axe longitudinal de la glissière 290. Le véhicule mobile est alors parfaitement mis en place sur sa base 200 de rechargement. Le bon contact entre le connecteur 260 et la batterie est favorisé par la double action du contact mobile 330 et de la pression exercée par l'action de la gravité sur le véhicule mobile. Il est à noter que la direction de pose du véhicule mobile sur le connecteur 260 est différente d'une translation selon le plan de référence. Le véhicule mobile se pose sur le connecteur 260 selon une translation sensiblement perpendiculaire au plan de référence. Cela a pour avantage d'effectuer une mise en contact du connecteur 260 avec la batterie (plus précisément avec les cosses de la batterie) juste au moment où la recharge peut commencer, afin d'éviter tout frottement lors de la mise en contact, et aussi afin d'éviter la formation d'arcs électriques lors de la séparation de la batterie du véhicule mobile et de la base 200.

## Revendications

1. Ensemble de rechargement comprenant un véhicule mobile et une base (200) de rechargement de forme complémentaire au véhicule mobile et apte à réceptionner le véhicule mobile et destinée à recharger une batterie d'un véhicule mobile comprenant au moins une roue (50, 51, 52), la base (200) étant connectable à une source électrique, et la base (200) comprenant :
• une surface de réception (210) et un plan socle (220) destiné à être posé sur un plan de référence (230), la surface de réception (210) et le plan socle (220) de la base (200) formant un angle aigu (240),
et **caractérisé en ce que** la base comprend :
• une cavité hémisphérique (250) réalisée en creux dans la surface de réception (210) et destinée à recevoir la au moins une roue (50, 51, 52),
• au moins un connecteur électrique (260) disposé de façon à permettre la connexion de la base (200) avec la batterie lors de la descente de la au moins une roue (50, 51, 52) dans la cavité hémisphérique (250),
**en ce que** la surface de réception comprend une glissière (290) réalisée dans la surface de réception (210) entre l'intersection de la surface de réception (210) et du plan socle (220) et la cavité (250), la glissière (290) étant destinée à guider la au moins une roue (50, 51, 52) vers la cavité (250).

2. Ensemble de rechargement selon la revendication précédente, **caractérisé en ce que** la base comprend en outre un connecteur de présence (265) du véhicule mobile sur la base (200) de façon à être activé après la connexion du connecteur électrique (260) et de la batterie.

3. Ensemble de rechargement selon l'une des revendications précédentes, **caractérisé en ce que** la base comprend une première contreforme (270) positionnée à l'intersection entre la surface de réception (210) et le plan socle (220), destinée à former une butée pour une deuxième roue (51, 52) du véhicule.

4. Ensemble de rechargement selon l'une des revendications précédentes, **caractérisé en ce que** la glissière (290) est configurée pour assurer un centrage de la roue (50) autour d'une direction principale de la glissière (290), et **en ce que** la précision du centrage augmente en se rapprochant de la cavité (250).

5. Ensemble de rechargement selon l'une des revendications précédentes, **caractérisé en ce que** la cavité (290) a un centre (300) et un pôle (310), un axe Z passant par le centre (300) et le pôle (310) étant sensiblement perpendiculaire au plan de référence (230), et **en ce que** la base (200) comprend un évidement (320) traversant la base (200) depuis le pôle (310) de la cavité (250) et sensiblement parallèlement à l'axe Z.

6. Ensemble de rechargement selon l'une des revendications précédentes, **caractérisé en ce que** le connecteur (260) comprend un contact mobile (330) dans une direction sensiblement perpendiculaire au plan socle (220).

7. Ensemble de rechargement selon l'une des revendications précédentes, **caractérisé en ce qu'**elle comprend un pourtour (340) apte à épouser les formes du véhicule mobile.

8. Procédé de recharge mettant en oeuvre un ensemble de rechargement selon l'une des revendications 2 à 7, **caractérisé en ce qu'**il comporte les étapes suivantes :
• Guidage de la au moins une roue (50, 51, 52) vers la cavité (250) au moyen de la glissière (290),
• Translation du véhicule mobile sur la surface de réception (210) (étape 1010),
• Insertion de la au moins une roue (50, 51, 52) dans la cavité hémisphérique (250) et mise en contact simultanée du connecteur électrique (260) de la base (200) avec la batterie du véhicule mobile (étape 1020).

9. Procédé de recharge selon la revendication précédente, **caractérisé en ce qu'**il comporte en outre une étape d'activation de la recharge comportant les étapes suivantes :
• Vérification de la présence du véhicule mobile sur la base (200) par enfoncement par le véhicule mobile du connecteur de présence (265),
• Mesure de la tension aux bornes de la batterie et comparaison de la tension mesurée à une valeur minimale et une valeur maximale de tension,
• Mesure de la résistance interne de la batterie et comparaison de la résistance mesurée à une valeur minimale et une valeur maximale de résistance.

10. Procédé de recharge mettant en oeuvre un ensemble selon l'une des revendications 2 à 7, **caractérisé en ce qu'**il comporte en outre une étape (1030) de mise en butée de la deuxième roue (51, 52) contre la contreforme (270).

## Patentansprüche

1. Ladebaugruppe, umfassend ein mobiles Fahrzeug und eine Ladebasis (200) mit einer zu dem mobilen Fahrzeug komplementären Form, die das mobile Fahrzeug aufnehmen kann und zum Aufladen einer Batterie eines mobilen Fahrzeugs bestimmt ist, das mindestens ein Rad (50, 51, 52) umfasst, wobei die Basis (200) mit einer Stromquelle verbunden werden kann, und wobei die Basis (200) Folgendes umfasst:
• eine Aufnahmefläche (210) und eine Sockelebene (220), bestimmt zum Stellen auf eine Referenzebene (230), wobei die Aufnahmefläche (210) und die Sockelebene (220) der Basis (200) einen spitzen Winkel (240) bilden,
und **dadurch gekennzeichnet, dass** die Basis Folgendes umfasst:
• eine halbkugelförmige Kavität (250), die als Aushöhlung in der Aufnahmefläche (210) ausgebildet und zum Aufnehmen des mindestens einen Rads (50, 51, 52) bestimmt ist,
• wenigstens einen elektrischen Verbinder (260), der so angeordnet ist, dass er das Verbinden der Basis (200) mit der Batterie beim Absenken des mindestens eines Rades (50, 51, 52) in die halbkugelförmige Kavität (250) zulässt,
dadurch, dass die Aufnahmefläche eine Gleitschiene (290) umfasst, die in der Aufnahmefläche (210) zwischen dem Schnittpunkt der Aufnahmefläche (210) und der Sockelebene (220) und der Kavität (250) realisiert ist, wobei die Gleitschiene (290) zum Führen des mindestens eines Rades (50, 51, 52) zu der Kavität (250) bestimmt ist.

2. Ladebaugruppe nach dem vorherigen Anspruch, **dadurch gekennzeichnet, dass** die Basis ferner einen Anwesenheitsverbinder (265) des mobilen Fahrzeugs auf der Basis (200) umfasst, so dass diese nach dem Verbinden des elektrischen Verbinders (260) und der Batterie aktiviert werden kann.

3. Ladebaugruppe nach einem der vorherigen Ansprüche, **dadurch gekennzeichnet, dass** die Basis eine erste Gegenform (270) umfasst, positioniert an der Grenzfläche zwischen der Aufnahmefläche (210) und der Sockelebene (220), bestimmt zum Bilden eines Anschlags für ein zweites Rad (51, 52) des Fahrzeugs.

4. Ladebaugruppe nach einem der vorherigen Ansprüche, **dadurch gekennzeichnet, dass** die Gleitschiene (290) zum Gewährleisten einer Zentrierung des Rades (50) um eine Hauptrichtung der Gleitschiene (290) konfiguriert ist, und dadurch, dass die Präzision der Zentrierung mit der Annäherung an die Kavität (250) zunimmt.

5. Ladebaugruppe nach einem der vorherigen Ansprüche, **dadurch gekennzeichnet, dass** die Kavität (290) einen Mittelpunkt (300) und einen Pol (310) umfasst, wobei eine Achse Z durch den Mittelpunkt (300) verläuft und der Pol (310) im Wesentlichen lotrecht zur Referenzebene (230) ist, und dadurch, dass die Basis (200) eine vom Pol (310) der Kavität (250) durch die Basis (200) verlaufende Aussparung (320) und im Wesentlichen parallel zur Achse Z umfasst.

6. Ladebaugruppe nach einem der vorherigen Ansprüche, **dadurch gekennzeichnet, dass** der Verbinder (260) einen mobilen Kontakt (330) in einer Richtung im Wesentlichen lotrecht zur Sockelebene (220) umfasst.

7. Ladebaugruppe nach einem der vorherigen Ansprüche, **dadurch gekennzeichnet, dass** sie eine Umrandung (340) umfasst, die sich an die Formen des beweglichen Fahrzeugs anschmiegt.

8. Ladeverfahren, das eine Ladebaugruppe nach einem der Ansprüche 2 bis 7 implementiert, **dadurch gekennzeichnet, dass** es die folgenden Schritte umfasst:
• Leiten des mindestens einen Rades (50, 51, 52) zu der Kavität (250) über die Gleitschiene (290),
• Verschieben des mobilen Fahrzeugs auf der Aufnahmefläche (210) (Schritt 1010),
• Einführen des mindestens einen Rades (50, 51, 52) in die halbkugelförmige Kavität (250) und gleichzeitiges Inkontaktbringen des elektrischen Verbinders (260) der Basis (200) mit der Batterie des mobilen Fahrzeugs (Schritt 1020).

9. Ladeverfahren nach dem vorherigen Anspruch, **dadurch gekennzeichnet, dass** es ferner einen Schritt des Aktivierens des Aufladens umfasst, der die folgenden Schritte umfasst:
• Überprüfen der Anwesenheit des mobilen Fahrzeugs auf der Basis (200) durch Niederdrücken des Anwesenheitsverbinders (265) durch das mobile Fahrzeug,
• Messen der Spannung an den Anschlüssen der Batterie und Vergleichen der gemessenen Spannung mit einem Spannungsmindest- und -höchstwert,
• Messen des internen Widerstands der Batterie und Vergleichen des gemessenen Widerstands mit einem Widerstandsmindest- und -höchstwert.

10. Ladeverfahren, das eine Baugruppe nach einem der Ansprüche 2 bis 7 implementiert, **dadurch gekennzeichnet, dass** es ferner einen Schritt (1030) des Anlegens des zweiten Rades (51, 52) an der Gegenform (270) umfasst.

## Claims

1. A recharging assembly comprising a mobile vehicle and a recharging base (200) of a form complementing the mobile vehicle and capable of receiving the mobile vehicle and intended to recharge a battery of a mobile vehicle comprising at least one wheel (50, 51, 52), the base (200) being able to be connected to an electrical source, and the base (200) comprising :
• a reception surface (210) and a baseplate plane (220) intended to be placed on a reference plane (230), the reception surface (210) and the baseplate plane (220) of the base (200) forming an acute angle (240),
and **characterized in that** the base comprises:
• a hemispherical cavity (250) hollowed out in the reception surface (210) and intended to receive the at least one wheel (50, 51, 52),
• at least one electrical connector (260) arranged so as to allow the connection of the base (200) with the battery when the at least one wheel (50, 51, 52) is lowered into the hemispherical cavity (250),
**in that** the reception surface comprises a guideway (290) produced in the reception surface (210) between the intersection of the reception surface (210) and of the baseplate plane (220) and the cavity (250), the guideway (290) being intended to guide the at least one wheel (50, 51, 52) toward the cavity (250).

2. The recharging assembly as claimed in the preceding claim, **characterized in that** the base further comprises a presence connector (265) of the mobile vehicle on the base (200) so as to be activated after the connection of the electrical connector (260) and of the battery.

3. The recharging assembly as claimed in one of the preceding claims, **characterized in that** the base comprises a first key form (270) positioned at the intersection between the reception surface (210) and the baseplate plane (220), intended to form an abutment for a second wheel (51, 52) of the vehicle.

4. The recharging assembly as claimed in one of the preceding claims, **characterized in that** the guideway (290) is configured to ensure a centering of the wheel (50) about a main direction of the guideway (290), and **in that** the accuracy of the centering increases on approaching the cavity (250).

5. The recharging assembly as claimed in one of the preceding claims, **characterized in that** the cavity (290) has a center (300) and a pole (310), an axis Z passing through the center (300) and the pole (310) being substantially at right angles to the reference plane (230), and **in that** the base (200) comprises a void (320) passing through the base (200) from the pole (310) of the cavity (250) and substantially parallel to the axis Z.

6. The recharging assembly as claimed in one of the preceding claims, **characterized in that** the connector (260) comprises a contact (330) that is mobile in a direction substantially at right angles to the baseplate plane (220).

7. The recharging assembly as claimed in one of the preceding claims, **characterized in that** it comprises a perimeter (340) capable of closely following the forms of the mobile vehicle.

8. A recharging method implementing a recharging assembly as claimed in one of claims 2 to 7, **characterized in that** it comprises the following steps:
• guiding of the at least one wheel (50, 51, 52) toward the cavity (250) by means of the guideway (290),
• translation of the mobile vehicle over the reception surface (210) (step 1010),
• insertion of the at least one wheel (50, 51, 52) into the hemispherical cavity (250) and simultaneous contacting of the electrical connector (260) of the base (200) with the battery of the mobile vehicle (step 1020).

9. The recharging method as claimed in the preceding claim, **characterized in that** it further comprises a step of activation of the recharging comprising the following steps:
• verification of the presence of the mobile vehicle on the base (200) by depression by the mobile vehicle of the presence connector (265),
• measurement of the voltage at the terminals of the battery and comparison of the measured voltage to a minimum voltage value and a maximum voltage value,
• measurement of the internal resistance of the battery and comparison of the measured resistance to a minimum resistance value and a maximum resistance value.

10. A recharging method implementing an assembly as claimed in one of claims 2 to 7, **characterized in that** it further comprises a step (1030) of abutment of the second wheel (51, 52) against the key form (270).
